# EUROPEAN PATENT SPECIFICATION

(11) **EP 1 443 781 B1**
(45) Date of publication and mention of the grant of the patent: **02.12.2009**
(21) Application number: 04006921.3
(22) Date of filing: 31.01.1997
(51) Int. Cl.: H04W 92/08, H04W 92/10

(54) **Mobile originated group short message service and apparatus therefor**
Von mobilen Endgeräten erzeugter Gruppen-Kurznachrichtendienst und Einrichtung dafür
Service de messages courts de groupe provenant d'une unité mobile et appareil prévu à cet effet

(30) Priority: 05.09.1996 GB 9618539
(43) Date of publication of application: 04.08.2004
(62) Divisional of application: 97902452.8
(73) Proprietor: Orange Personal Communications Services Ltd., Bradley Stoke, Bristol BS32 4QJ (GB)
(72) Inventor: Green, Mark, Weston-SuperMare North Somerset BS24 9XB (GB)
(74) Representative: McCann, Heather Alison

(56) References cited:
- WO-A-94/09599
- WO-A-96/10895
- US-A- 5 398 021
- US-A- 5 450 071
- US-A- 5 481 254

## Description

### Field of the Invention

This invention relates to mobile communications, in particular but not exclusively to cellular radio communications, such as in a GSM (Global System for Mobile communications) digital cellular radio network.

### Background of the Invention

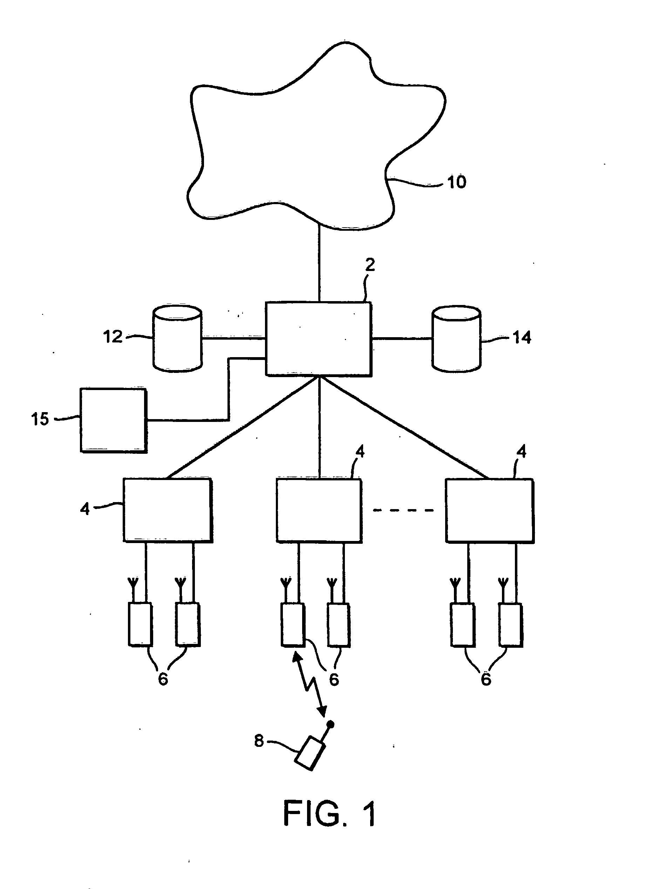

A known conventional GSM network, referred to as a public land mobile network (PLMN), is schematically illustrated in Figure 1. A mobile switching centre (MSC) 2 is connected via communication links to a number of base station controller (BSCs) 4. The BSCs 4 are dispersed geographically across areas served by the mobile switching centre 2. Each BSC controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". A GSM network is provided with a large number of such cells, which are ideally contiguous to provide continuous coverage over the whole network territory.

A mobile switching centre 2 is also connected via communications links to other mobile switching centres in the remainder of the mobile communications network 10, and to a public service telephone network (PSTN), which is not illustrated. The mobile switching centre 2 is provided with a home location register (HLR) 12 which is a database storing subscriber authentication data including the international mobile subscriber identity (IMSI) which is unique to each mobile station 8. The IMSI is also stored in the mobile station in a subscriber identity module (SIM) along with other subscriber-specific information.

The mobile switching centre is also provided with a visitor location register (VLR) 14 which is a database temporarily storing subscriber authentication data for mobile stations which are active in the area served by the mobile switching centre 2.

The GSM system, in common with other mobile communication systems, supports a variety of teleservices. One such teleservice is a speech teleservice, for supporting voice calls on a speech traffic channel. Other teleservices include a short message service (SMS) which is used for transmitting alphanumeric messages in the system on a low rate data traffic channel. A user of the mobile station 8 may generate a message by input to a user interface device, and transmit the message, along with the directory number of the terminating station for the short message, to the service BTS 6. The message is forwarded to the MSC 2, which forwards the message transmitted from the mobile station 8 to a short message service centre (SC) 15, which stores the message for onward transmission to the terminating station corresponding to the directory number specified by the user of the mobile station 8.

International Patent Application No. WO94/09599 describes a method for transmitting short messages in a GSM network. In order to reduce the effort and signalling load required in order to transmit a large number of short messages to a large number of terminating subscribers, a short message service centre copies a message received from the message generating mobile station to produce a large number of messages, which are then forwarded to the intended recipients by the service centre.

When the service centre receives a short message signal, it analyses the part of the message signal containing the address of the recipient to determine whether it contains the address of a single subscriber or a predefined identifier for a group of recipients. This identifier, if present, is used to access a list of directory numbers stored in the service centre, which is used to determine the intended recipients of the message. The message is copied by the service centre to each of those intended recipients.

Thus, all mobile stations which are to have the capability of sending a single message to be copied to a number of recipients must be capable of appending group identifiers to the said message in place of the single recipient address.

In addition, this proposal requires the replacement of a network element, namely the short message service centre for an existing mobile communications network, which in some cases is not practical.

### Summary of the Invention

According to a first aspect of the invention there is provided a mobile station for use in a mobile communications system, said mobile station comprising:
a memory for storing a plurality of recipient addresses and a message to be sent from the mobile station;
a group edit menu facility for allowing a user to create a group of recipient addresses and allowing a user to specify a group identifier; and
means for storing group data relating to said created group, said group data including data identifying said group identifier.

The invention in this aspect allows a user to create a group of recipient addresses for use in sending a message to said recipients (or for display or other purposes), by means of a convenient identifier to be specified by a user of the station. The storage of group data need not include the recipient addresses in full, and may for example refer to the addresses in a stored list, thereby reducing duplication of data where the user has already stored the recipient addresses.

Advantageously, for a particular group, said group data comprises pointers to each of the recipient addresses in the group and said group edit menu facility allows a user to create one of said groups by selecting recipient addresses from a list of recipient addresses stored in said memory.

If a recipient address is deleted from the list, the data relating to the addresses in each group will no longer be valid insofar as one of the addresses identified in the data, if it is the deleted address, will no longer be available. The user station preferably further comprises means for automatically revising the data relating to the deleted recipient address.

Preferably said memory is arranged to store data identifying a plurality of predetermined groups of recipient addresses, and to store data for presenting a group identifier in the form of an alphanumeric character string previously specified by a user, whereby to perform said selection.

Conveniently said group data are stored in a removable data store, such as a SIM. The removable data store can comprise a processor, and said group menu facility can be implemented by commands sent by said processor to the mobile station. The menu facility is arranged to present the number of recipient's addresses in a group to the user.

Preferably said memory comprises a removable data store such as a SIM.

In accordance with a further aspect of the invention there is provided a method of allowing user selection of recipient addresses in a user station for use in a mobile communications system, the method comprising:
storing first data relating to a plurality of recipient addresses;
presenting said first data to a user of the station in order to allow a user to create a group of recipient addresses;
allowing a user to specify a group identifier corresponding to said created group; and
storing second data identifying said group identifier.

### Brief Description of the Drawings

Figure 1 is a block diagram of a mobile communications network;
Figure 2 is a block diagram of a mobile station;
Figure 3 illustrates the structure of a linear fixed data file;
Figure 4 illustrates the structure of an ADN data record;
Figure 5 illustrates the contents of a group list file containing directory number group records;
Figure 6 is a flow diagram showing steps taken when sending a short message;
Embodiments of the present invention will now be described, by way of example only, with reference to the following drawings in which:
Figure 7 is a flow diagram showing steps taken when editing a directory number group list in accordance with the present invention; and
Figure 8 is a flow diagram illustrating steps taken by the mobile station when an ADN record is deleted.

### Detailed Description of the Drawings

A GSM network, referred to as a public land mobile network (PLMN), is schematically illustrated in Figure 1. This is in itself known and will not be described in detail. A mobile switching centre (MSC) 2 is connected via communication links to a number of base station controller (BSCs) 4. The BSCs 4 are dispersed geographically across areas served by the mobile switching centre 2. Each BSC 4 controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". A GSM network is provided with a large number of such cells, which are ideally contiguous to provide continuous coverage over the whole network territory.

A mobile switching centre 2 is also connected via communications links to other mobile switching centres in the remainder of the mobile communications network 10, and to a public service telephone network (PSTN), which is not illustrated. The mobile switching centre 2 is provided with a home location register (HLR) 12 which is a database storing subscriber authentication data including the international mobile subscriber identity (IMSI) which is unique to each mobile station 8. The IMSI is also stored in the mobile station in a subscriber identity module (SIM) along with other subscriber-specific information.

The mobile switching centre is also provided with a visitor location register (VLR) 14 which is a database temporarily storing subscriber authentication data for mobile stations active in its area.

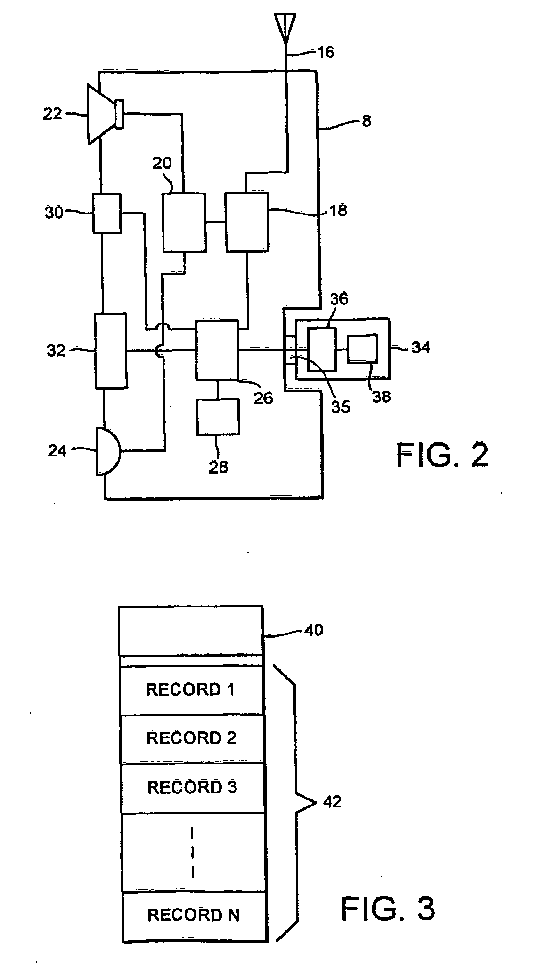

Referring to Figure 2, a mobile station 8 comprises a transmit/receive aerial 16, a radio frequency transceiver 18, a speech coder/decoder 20 connected to a loudspeaker 22 and a microphone 24, a processor circuit 26 and its associated memory 28, an LCD display 30 and a manual input port (keypad) 32. The mobile station is connected to a removable SIM 34 via electrical contacts 35.

The SIM 34 connected to the mobile station has a SIM processor 36, for example a Hitachi H8 microprocessor, and SIM memory 38, which includes for example 16 kilobytes of mask-programmed ROM containing the SIM operating system, 8 kilobytes of read/write EEPROM for the non-volative storage of data items and 256 bytes of scratchpad RAM for use by the SIM processor during operations.

Both the mobile station 8 and the SIM 34 are well known and therefore need not be described in detail herein. A commercially-available SIM is the GemXplore (registered trade mark) SIM card produced by Gemplus, BP 100-13881, Gemenos Cedex-France.

As described above, the SIM 34 is used for the storage and retrieval of data items by the processor 26 of the mobile station 8. The command set, data file structure and data coding format for data communicated via the interface between the mobile station processor 26 and the SIM processor 36 are all specified, in the GSM system, in GSM technical specification 11.11 (ETS 300 536).

A standard GSM file structure for the storage of data on a SIM, referred to as a linear fixed file structure, is illustrated in Fig. 3. It consists of a header 40 and record space 42. The record space is divided into N fixed length records.

One data record provided in the SIM memory 38 in a conventional SIM 34 is an abbreviated dialling number (ADN) record 44, which forms part of an ADN list file having a linear fixed file structure. Each ADN record 44 has data stored in a fixed length coding format. The record 44 is divided into fixed-length data blocks, each consisting of one or more bytes. A first data block 46, consisting of n bytes, is reserved for directory number identifier data. A second block 48, consisting of one byte, is reserved for data indicating the length of the directory number. A third block 50, consisting of one byte, is reserved for data indicating the type of directory number stored in the record. A fourth block 52, consisting of 8 bytes of memory, is reserved for the directory number data itself. A fifth block 54, consisting of one byte, is reserved for a "capability configuration pointer", indicating the teleservices (e.g. voice call, SMS, fax, etc.) which can be supported by the telephone equipment corresponding to the directory number stored. A final data block 56, consisting of one byte, is an extension record pointer, which indicates the address of an extension record to be accessed in a different data file to give the remainder of a directory number.

The mobile station 8 is capable of sending SMS teleservice short messages as defined in GSM Technical Specification 03.40 (ETS 300 608). In the known short message service, a user of the mobile station 8 composes a short message, consisting of alphanumeric characters, and specifies a recipient directory number, by input via the keypad 32. When instructed to by the user, the mobile station then sends a short message signal on a data traffic channel of the radio interface to the fixed portions of the mobile communications network. The short message signal contains data defining the identity of the originating mobile station, data indicating the directory number of the intended recipient, and data within which the short message is coded. When the signal is received by the MSC 2, it forwards it to the SMS service centre 15 for storage and forwarding to the intended recipient.

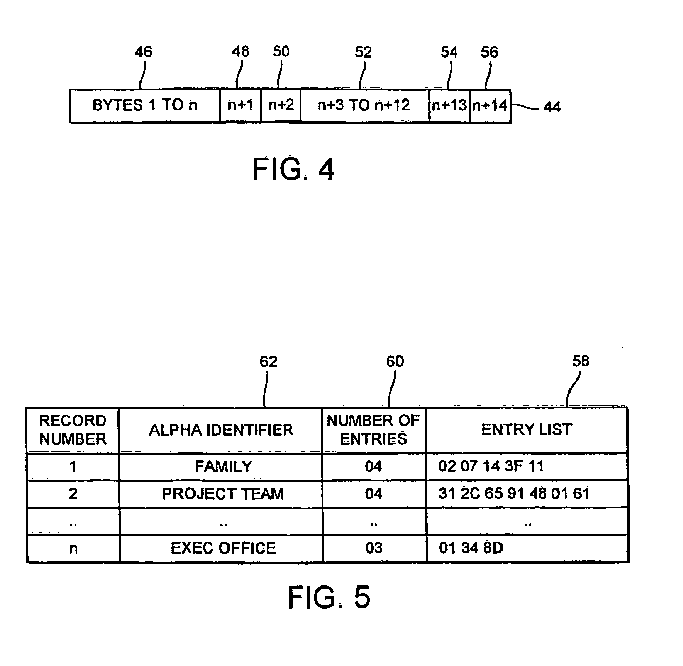

Figure 5 illustrates the contents of a new data record file, referred to herein as a group list file, stored in the SIM memory 38 and used in connection with the SMS teleservice. The group list file contains a number of records 1 to n, each record storing data relating to (i) an entry list 58 containing pointers to records in the ADN list stored in a SIM, namely the record numbers of particular ADN records, and (ii) the number of entries 16 in the entry list 58, and an alphanumeric group identifier 62, such as "Family", "Project Team", etc. as shown. The entry list 58 for each record is selected by the mobile user from entries on the ADN list in the SIM, and the group identifier 62 is defined by the user of the mobile station by keypad input. The group list is stored in the SIM 34 of the mobile station at a predefined address, and records of the group list can be read by the mobile station processor 26 by means of a read command specifying the group list address and the address (record number) of the record in the group list.

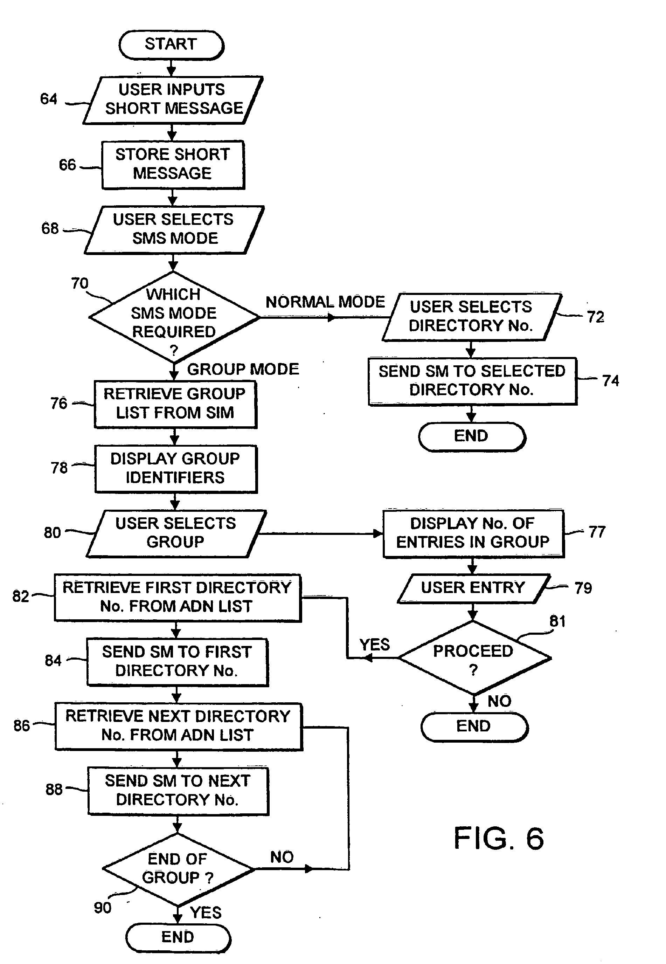

Figure 6 illustrates a procedure for sending SMS signals, which utilises the group list described above. It allows the user of the mobile station 8 to select either a normal mode, in which a short message is sent to a single selected directory number, or group mode in which a short message is sent to a selected group of directory numbers.

The user first selects the short message service and composes the short message, step 64, which is stored by the mobile station in step 66. Next, the user is prompted to select an SMS mode, which selection is performed by user input in step 68. If the user requires only normal mode, step 70, the user selects the intended recipient's directory number in step 72, and instructs the mobile station to proceed. The mobile station 8 then proceeds to send the short message radio signal, step 74, containing the short message.

If the user requires group mode, step 70, the mobile station retrieves the group list from the SIM 34, by addressing each record in turn, step 76, and displays the group identifier 62 to the user, step 78, on LCD display 30. The user then selects an intended group of recipient directory numbers by keypad input in step 80, to which the mobile station responds by displaying the number of directory number entries in the selected record, step 77. The mobile station may also display the alphanumeric identifiers of each ADN record in the selected group, if required. If the user is satisfied with the selection, by user entry, step 79, the mobile station is instructed to proceed, step 81.

The mobile station now has stored in its memory 28 the short message to be sent and the group record of the selected group. In step 82, the mobile station processor 26 proceeds to read the first entry in the entry list 58 indicating the ADN record number of the first intended recipient directory number. The mobile station processor then reads the corresponding record stored in the ADN list of the mobile station, and retrieves the stored directory number.

The mobile station then proceeds directly to transmit the short message radio signal, containing the short message, in step 84, to the serving BTS 6 for the first directory number, which is indicated in the short message signal.

Once the short message signal has been transmitted in its entirety, the mobile station proceeds to retrieve the directory number from the ADN record having a record number which appears next on the entry list 58 of the group list, in step 86. A short message signal, containing the same short message, is then sent for this next directory number, step 88. This directory number retrieval and short message signal transmission process is repeated until the end of the entry list 58 is reached, in step 90.

Thus, a short message is sent to each of the directory numbers corresponding to the entries in the group record entry list 58 automatically, i.e. without user intervention, in automatically consecutive order, i.e. without requiring the user to select an intended recipient directory number after a short message has been sent to a different intended recipient directory number.

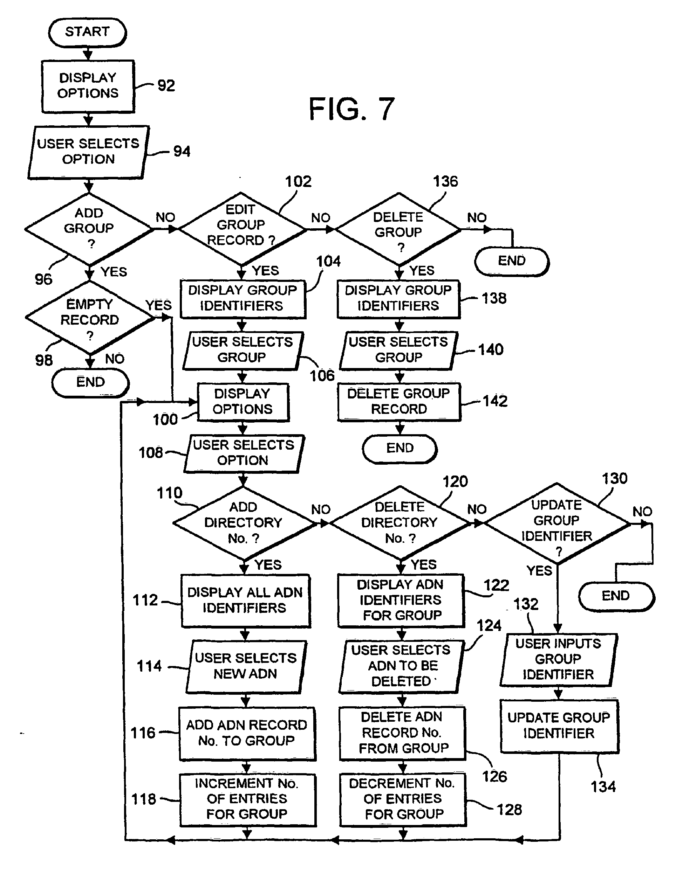

Referring now to Figure 7, the group list can be edited in accordance with a menu facility provided in this embodiment of the invention. When the user enters the group list edit function, the mobile station proceeds to display different options on the LCD display 30, step 92, which the user selects between, step 94, by keypad input.

If the user chooses to add a group record, step 96, to the group list, the mobile station checks, step 98, if a record is available. If not, the edit facility ends. If a group record is available, the mobile station proceeds to display options for editing the selected empty group record, step 100.

If the user selects in step 94 to edit a group record, step 102, the mobile station 8 displays all of the group identifiers for the current group records in the group list, step 104. The user then selects one of the group records by means of the group identifier, step 106, and the mobile station then proceeds to display further options, step 100, which the user selects between by keypad input in step 108.

If the user wishes to add a directory number to the entry list for the selected group record, step 110, the mobile station proceeds to display all of the ADN identifiers appearing in the ADN list stored in the mobile station SIM 34, step 112. From these ADN identifiers, the user selects the chosen ADN to be added to the group record, step 114. The mobile station then proceeds to add the ADN record number of the selected ADN record to the group entry list 58, in step 116. Next, the value of the number of entries 60 for the group is incremented to reflect the added record number entry, step 118. The procedure then moves back to step 100, in which the options for editing the selected group are again displayed.

If the user selects in step 108 to delete a directory number from the entry list of the selected group, step 120, the mobile station proceeds to display each of the ADN identifiers for the ADN record indicated in the group entry list 58, step 122. The user then selects which of the group's directory numbers is to be deleted, step 124, by means of the ADN identifiers. The mobile station then proceeds to delete the selected ADN record number from the group entry list 58, step 126, shifting the remaining entries if required to defragment the entry list. Next, the mobile station decrements the number of entries datum 60 to reflect the reduced number of entries in the entry list 58, step 128. The procedure then moves back to step 100, in which the group edits options are displayed again.

If in step 108 the user selects the option to update the group identifier 62, the user is prompted to input the new group identifier, step 132. The mobile station then updates the group identifier data for the record, step 134, and returns to step 100.

If in step 94 the user selects the option to delete a group from the group list, step 136, the mobile station proceeds to display each of the group identifiers occurring in the group list, 138. From these, the user selects a group record to be deleted, 140, which the mobile station proceeds to delete in step 142. That group record then becomes available for the storage of a further group list.

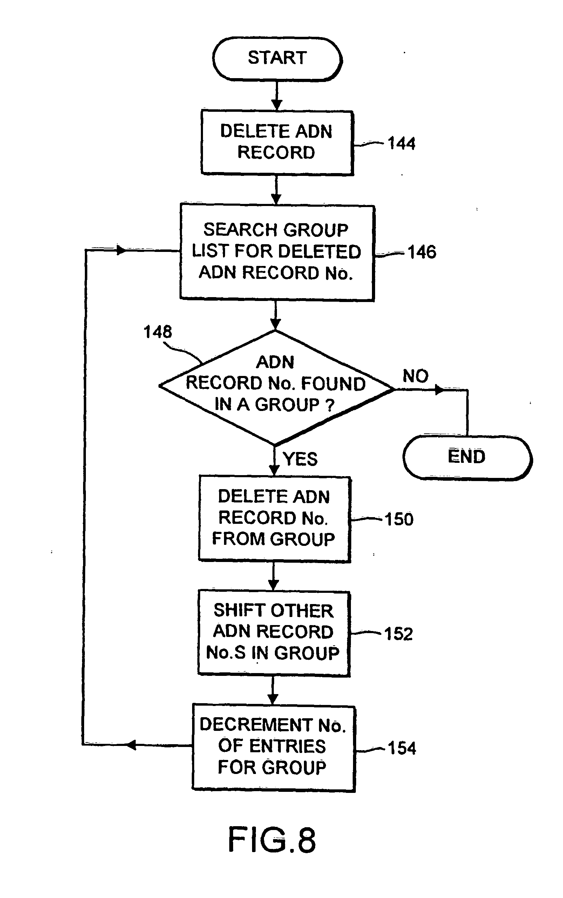

Referring now to Figure 8, there is also provided in this embodiment a procedure whereby, if an ADN record is deleted from the ADN record list, the group list stored on the SIM is updated. When an ADN record is deleted by input from the user or otherwise, step 144, the mobile station performs a search through the entry lists 58 of each group record in the group list, for the record number of the deleted ADN record, step 146.

If the ADN record number is found in a group, step 148, it is deleted from the entry list of the group in which that ADN record is found, step 150, and the remaining entries in the entry list 58 are shifted, to reduce any fragmentation of the entry list caused by the deletion of an entry.

Next, the mobile station proceeds to update the number of entries datum 60 by decrementing the value stored to reflect the deletion of an entry from the entry list 58. The search procedure is re-initiated, returning to step 146, until no further instance is found of the deleted ADN record number occurring in the group list.

Here, the mobile station automatically sends each SMS signal without requiring intervening user input after the mobile station is instructed to proceed to send the SMS signals.

In some cases it may however be preferred to allow the user to enter an instruction to continue in the time after one SMS signal has been sent and before the following SMS signal is sent. The mobile station would signal, for example audibly, to the user when the first SMS signal has been sent successfully, to prompt the user for a continue command, which may be input for example via the keypad of the mobile station. A continue command could be required after each SMS signal is sent, or intermittently after a set number of signals has been sent.

Here, the mobile station is a GSM-compatible mobile station, having a SIM. However, it could be implemented in relation to a mobile station used in other mobile communications systems, such as CDMA, PDH and third generation systems. References to GSM include other standards for which at least some features are set by the GSM technical specifications such as the PCN standard and the DCS 1800 standard.

The group list data need not be stored on a removable data store, such as a SIM, but could be stored in another memory element provided in the mobile station.

The group list records can contain the record numbers of the ADN records containing the recipient directory numbers for the group. Alternatively, each group list record can contain the recipient directory numbers for the group in full. An ADN list can then be assembled from the superset of entries in each of the group list and/or a supplemental ADN list.

Furthermore, the mode of selection of the directory numbers in a group is not limited to the selection of a pre-stored group of directory numbers. After the user has composed the short message, the user could also be presented with the ADN list record identifiers, from which the user could select each ADN record to be included in the selected group by keypad input. The mobile station would, in response to a command from the user, then send an SMS signal for each member of the selected group in an automatically consecutive order.

The invention could be used in connection with any teleservice which a mobile station supports, such as a multiple-recipient facsimile teleservice. Also envisaged is a method for establishing multiparty voice calls which is essentially similar to the methods described for sending SMS signals to a group of recipients. In the case of the establishment of multiparty calls, a voice call establishment procedure would be initiated for each of the group list members in turn, in accordance with the selected group list record.

The group messaging procedure can be directed by the mobile station processor, the SIM playing a passive role. Alternatively, the procedure could be implemented entirely by commands sent by the SIM processor to the mobile station processor. Thus, the SIM processor would instruct the mobile station processor to offer a group messaging menu facility, the menu facility prompts being sent from the SIM to the mobile station. Once a group SMS signalling procedure is confirmed by the user, the SIM processor would instruct the mobile station processor to send an SMS signal to each of the recipient directory numbers in turn. An advantage of this is that a group messaging feature can be provided without the need for modification of the mobile station. All that is required is a mobile station which accepts the appropriate control signals sent by the SIM processor.

It is also envisaged that various modifications and variations to the above described embodiments could be made, without falling outside the scope of the present invention which is defined in the appended claims.

## Claims

1. A mobile station (8) for use in a mobile communications system (2, 4, 6, 10, 12, 14, 15), said mobile station comprising:
a memory (38) for storing a plurality of recipient addresses and a message to be sent from the mobile station (8),
**characterised by** the mobile station comprising
a group edit menu facility for allowing a user to create (96) a group of recipient addresses and allowing a user to specify a group identifier (62); and
means for storing group data relating to said created group, said group data including data identifying said group identifier (62).

2. A mobile station (8) according to claim 1, wherein, for a particular group, said group data comprises pointers (58) to each of the recipient addresses in the group.

3. A mobile station (8) according to claim 1 or claim 2, wherein said group edit menu facility allows a user to create (96) one of said groups by selecting (114) recipient addresses from a list of recipient addresses stored in said memory (38).

4. A mobile station (8) according to claim 3, wherein recipient addresses are deletable from said list, the mobile station further comprising means for searching (146) and revising (150, 152, 154) said group data relating to a deleted recipient address in response to the deletion (144).

5. A mobile station according to any one of the preceding claims, wherein said memory (38) is arranged to store data identifying a plurality of predetermined groups of recipient addresses.

6. A mobile station (8) according to any one of the preceding claims, wherein said memory (38) is arranged to store data (62) for presenting a group identifier in the form of an alphanumeric character string previously specified by a user, whereby to perform said selection.

7. A mobile station (8) according to any one of the preceding claims, wherein said group data are stored in a removable data store (34), such as a SIM.

8. A mobile station (8) according to claim 7, wherein said removable data store (34) comprises a processor (36) and said group menu facility is implemented by commands sent by said processor (36) to the mobile station (8).

9. A mobile station (8) according to any one of the preceding claims, wherein said memory comprises a removable data store (34), such as a SIM.

10. A mobile station (8) according to any one of the preceding claims, wherein said menu facility is arranged to present (77) the number (60) of recipient's addresses in a group to the user.

11. A method of allowing user selection of recipient addresses in a user station for use in a mobile communications system, the method comprising:
storing first data relating to a plurality of recipient addresses; and
presenting said first data to a user of the station,
**characterised by**
allowing a user to create (96) a group of recipient addresses on the basis of said first data;
allowing a user to specify a group identifier corresponding to said created group; and
storing second data identifying said group identifier.

12. A method according to claim 11, including presenting to a user of the station an information item relating to the number of recipient addresses in each said group.

13. A method according to claim 11 or claim 12, in which said group identifier comprises an alphanumeric character string.

14. A method according to any one of claim 11 to claim 13, further including allowing a user to specify deletion of a recipient address from the created group.

15. A method according to claim 14, further including searching (146) and revising (150, 152, 154) said second data in response to the specified deletion.

## Patentansprüche

1. Mobilstation (8) zur Verwendung in einem Mobilkommunikationssystem (2, 4, 6, 10, 12, 14, 15), wobei die Mobilstation umfasst:
einen Speicher (38) zum Speichern einer Mehrzahl von Empfängeradressen und einer von der Mobilstation (8) zu versendenden Nachricht,
**dadurch gekennzeichnet, dass** die Mobilstation des Weiteren umfasst:
eine Gruppenbearbeitungs-Menüeinrichtung, die einem Benutzer ermöglicht, eine Gruppe von Empfängeradressen zu erzeugen (96), und die einem Benutzer ermöglicht, eine Gruppenidentifikation (62) zu spezifizieren; und
Mittel zum Speichern von Gruppendaten, die sich auf die erzeugte Gruppe beziehen, wobei die Gruppendaten Daten beinhalten, die die Gruppenidentifikation (62) identifizieren.

2. Mobilstation (8) nach Anspruch 1, wobei die Gruppendaten für eine bestimmte Gruppe Zeiger (58) zu jeder der Empfängeradressen in der Gruppe umfassen.

3. Mobilstation (8) nach Anspruch 1 oder 2, wobei die Gruppenbearbeitungs-Menüeinrichtung einem Benutzer ermöglicht, eine der Gruppen durch ein Auswählen (114) von Empfängeradressen aus einer Liste von in dem Speicher (38) gespeicherten Empfängeradressen zu erzeugen (96).

4. Mobilstation (8) nach Anspruch 3, wobei Empfängeradressen aus der Liste löschbar sind und wobei die Mobilstation des Weiteren Mittel zum Suchen (146) und Überarbeiten (150, 152, 154) der Gruppendaten umfasst, die sich auf eine gelöschte Empfängeradresse beziehen, als Antwort auf das Löschen (144).

5. Mobilstation nach einem der vorangegangenen Ansprüche, wobei der Speicher (38) ausgestaltet ist, Daten zu speichern, die eine Mehrzahl von vorbestimmten Gruppen von Empfängeradressen identifizieren.

6. Mobilstation (8) nach einem der vorangegangenen Ansprüche, wobei der Speicher (38) ausgestaltet ist, Daten (62) zum Präsentieren einer Gruppenidentifikation in Form einer alphanumerischen Zeichenkette, die zuvor von einem Benutzer spezifiziert wurde, zu speichern, um hiermit die Auswahl durchzuführen.

7. Mobilstation (8) nach einem der vorangegangen Ansprüche, wobei die Gruppendaten in einem entfernbaren Datenspeicher (34), wie etwa einem SIM, gespeichert werden.

8. Mobilstation (8) nach Anspruch 7, wobei der entfernbare Datenspeicher (34) einen Prozessor (36) umfasst und wobei die Gruppen-Menüeinrichtung durch Befehle implementiert ist, die von dem Prozessor (36) zu der Mobilstation (8) gesendet werden.

9. Mobilstation (8) nach einem der vorangegangenen Ansprüche, wobei der Speicher einen entfernbaren Datenspeicher (34), wie etwa ein SIM, umfasst.

10. Mobilstation (8) nach einem der vorangegangenen Ansprüche, wobei die Menüeinrichtung ausgestaltet ist, die Anzahl (60) von Empfängeradressen in einer Gruppe dem Benutzer zu präsentieren (77).

11. Verfahren zum Ermöglichen einer Benutzerauswahl von Empfängeradressen in einer Benutzerstation zur Verwendung in einem Mobilkommunikationssystem, wobei das Verfahren die folgenden Schritte umfasst:
Speichern von ersten Daten, die sich auf eine Mehrzahl von Empfängeradressen beziehen; und
einem Benutzer der Station die ersten Daten präsentieren,
**dadurch gekennzeichnet, dass** das Verfahren des Weiteren die folgenden Schritte umfasst:
einem Benutzer ermöglichen, eine Gruppe von Empfängeradressen auf Basis der ersten Daten zu erzeugen (96);
einem Benutzer ermöglichen, eine Gruppenidentifikation, die mit der erzeugten Gruppe korrespondiert, zu spezifizieren; und
Speichern von zweiten Daten, die die Gruppenidentifikation identifizieren.

12. Verfahren nach Anspruch 11, wobei das Verfahren des Weiteren beinhaltet, einem Benutzer der Station ein Informationselement, das sich auf die Anzahl von Empfängeradressen in jeder Gruppe bezieht, zu präsentieren.

13. Verfahren nach Anspruch 11 oder 12, wobei die Gruppenidentifikation eine alphanumerische Zeichenkette umfasst.

14. Verfahren nach einem der Ansprüche 11 bis 13, wobei das Verfahren des Weiteren beinhaltet, einem Benutzer zu ermöglichen, eine Löschung einer Empfängeradresse aus der erzeugten Gruppe zu spezifizieren.

15. Verfahren nach Anspruch 14, wobei das Verfahren des Weiteren ein Suchen (146) und ein Überarbeiten (150, 152, 154) der zweiten Daten als Antwort auf die spezifizierte Löschung beinhaltet.

## Revendications

1. Station mobile (8) destinée à être utilisée dans un système de communication mobile (2, 4, 6, 10, 12, 14, 15), ladite station mobile comprenant :
une mémoire (38) destinée à stocker une pluralité d'adresses de destinataire et un message destiné à être envoyé à partir de la station mobile (8),
**caractérisé en ce que** la station mobile comprend :
une fonction de menu d'édition de groupe destinée à permettre à un utilisateur de créer (96) un groupe d'adresses de destinataire et à permettre à un utilisateur de spécifier un identifiant de groupe (62) ; et
des moyens destinés à stocker des données de groupe connexes audit groupe créé, lesdites données de groupe comprenant des données identifiant ledit identifiant de groupe (62).

2. Station mobile (8) selon la revendication 1, dans laquelle, pour un groupe particulier, lesdites données de groupe comprennent des pointeurs (58) pour chacune des adresses de destinataire dans le groupe.

3. Station mobile (8) selon la revendication 1 ou la revendication 2, dans laquelle ladite fonction de menu d'édition de groupe permet à un utilisateur de créer (96) un desdits groupes en sélectionnant (114) des adresses de destinataire à partir d'une liste d'adresses de destinataire stockées dans ladite mémoire (38).

4. Station mobile (8) selon la revendication 3, dans laquelle des adresses de destinataire peuvent être supprimées de ladite liste, la station mobile comprenant en outre des moyens destinés à chercher (146) et à réviser (150, 152, 154) lesdites données de groupe connexes à une adresse de destinataire supprimée en réponse à la suppression (144).

5. Station mobile (8) selon l'une quelconque des revendications précédentes, dans laquelle ladite mémoire (38) est agencée pour stocker des données identifiant une pluralité de groupes prédéterminés d'adresses de destinataire.

6. Station mobile (8) selon l'une quelconque des revendications précédentes, dans laquelle ladite mémoire (38) est agencée pour stocker des données (62) pour présenter un identifiant de groupe sous forme de chaîne de caractères alphanumériques auparavant spécifiée par un utilisateur, pour ainsi réaliser ladite sélection.

7. Station mobile (8) selon l'une quelconque des revendications précédentes, dans laquelle lesdites données de groupe sont stockées dans une mémoire de données amovible (34), telle qu'une SIM.

8. Station mobile (8) selon la revendication 7, dans laquelle ladite mémoire de données amovible (34) comprend un processeur (36) et ladite fonction de menu de groupe est implémentée par des commandes envoyées par ledit processeur (36) à la station mobile (8).

9. Station mobile (8) selon l'une quelconque des revendications précédentes, dans laquelle ladite mémoire comprend une mémoire de données amovible (34), telle qu'une SIM.

10. Station mobile (8) selon l'une quelconque des revendications précédentes, dans laquelle ladite fonction de menu est agencée pour présenter (77) à l'utilisateur le nombre (60) d'adresses de destinataire dans un groupe.

11. Procédé destiné à permettre à un utilisateur une sélection d'adresses de destinataire dans une station d'utilisateur destinée à être utilisée dans un système de communication mobile, le procédé comprenant les étapes consistant à :
stocker des premières données connexes à une pluralité d'adresses de destinataire ; et
présenter lesdites premières données à un utilisateur de la station,
**caractérisé par** les étapes consistant à :
permettre à un utilisateur de créer (96) un groupe d'adresses de destinataire d'après lesdites premières données ;
permettre à un utilisateur de spécifier un identifiant de groupe correspondant audit groupe créé ; et
stocker des secondes données identifiant ledit identifiant de groupe.

12. Procédé selon la revendication 11, comprenant l'étape consistant à présenter à un utilisateur de la station une information connexe au nombre d'adresses de destinataire dans chaque dit groupe.

13. Procédé selon la revendication 11 ou la revendication 12, dans lequel ledit identifiant de groupe comprend une chaîne de caractères alphanumériques.

14. Procédé selon l'une quelconque des revendications 11 à 13, comprenant en outre l'étape consistant à permettre à un utilisateur de spécifier une suppression d'une adresse de destinataire du groupe créé.

15. Procédé selon la revendication 14, comprenant en outre les étapes consistant à chercher (146) et à réviser (150, 152, 154) lesdites secondes données en réponse à la suppression spécifiée.
